(19) Europäisches Patentamt
European Patent Office
Office européen des brevets

(11) EP 2 268 724 B1

(12) # EUROPÄISCHE PATENTSCHRIFT

(45) Veröffentlichungstag und Bekanntmachung des Hinweises auf die Patenterteilung:
**13.07.2011 Patentblatt 2011/28**

(21) Anmeldenummer: **09735563.0**

(22) Anmeldetag: **26.03.2009**

(51) Int Cl.:
***C08K 3/00*** *(2006.01)*

(86) Internationale Anmeldenummer:
**PCT/EP2009/002220**

(87) Internationale Veröffentlichungsnummer:
**WO 2009/129909 (29.10.2009 Gazette 2009/44)**

(54) **DISPERSIONEN VON WACHSEN UND ANORGANISCHEN NANOPARTIKELN SOWIE DEREN VERWENDUNG**

DISPERSION OF WAXES AND INORGANIC NANOPARTICLES AND USE THEREOF

DISPERSIONS DE CIRES ET DE NANOPARTICULES MINÉRALES, ET LEUR UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **25.04.2008 DE 102008021007**

(43) Veröffentlichungstag der Anmeldung:
**05.01.2011 Patentblatt 2011/01**

(73) Patentinhaber: **BYK-Chemie GmbH**
**46483 Wesel (DE)**

(72) Erfinder:
- **NOLTE, Ulrich**
**47533 Kleve (DE)**
- **BERKEI, Michael**
**45721 Haltern am See (DE)**
- **SAWITOWSKI, Thomas**
**46485 Wesel (DE)**

(74) Vertreter: **Strehlke, Ingo Kurt**
**Gesthuysen, von Rohr & Eggert**
**Postfach 10 13 54**
**45013 Essen (DE)**

(56) Entgegenhaltungen:
**EP-A- 1 609 379**
**WO-A-01/10635**
**WO-A-01/75216**
**WO-A-2007/095292**
**WO-A-2007/146390**
**WO-A-2008/093999**
**GB-A- 2 410 500**
**US-A1- 2005 136 349**
**US-A1- 2006 041 047**
**US-A1- 2006 147 828**

- **DATABASE WPI Week 200453 Thomson Scientific, London, GB; AN 2004-546244 XP002537802 & JP 2004 181864 A (KONICA CORP) 2. Juli 2004 (2004-07-02)**
- **DATABASE WPI Week 200748 Thomson Scientific, London, GB; AN 2007-485544 XP002537803 & JP 2006 272767 A (KOBE STEEL LTD) 12. Oktober 2006 (2006-10-12)**

EP 2 268 724 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Dispersionen, welche in Kombination einerseits Partikel auf Basis mindestens eines organischen Materials, welches mindestens ein Wachs enthält oder hieraus besteht, insbesondere Wachspartikel, und andererseits Partikel auf Basis mindestens eines anorganischen Materials, insbesondere anorganische Nanopartikel, umfassen, sowie die Verwendung dieser Dispersionen, insbesondere als und/oder in Beschichtungsstoffen und Beschichtungssystemen, wie insbesondere Lacken, Farben und dergleichen, in Kunststoffen, in Schaumstoffen, als oder in Kosmetika, insbesondere Nagellacken, als oder in Klebstoffen, als oder in Dichtungsmassen etc.

Insbesondere betrifft die vorliegende Erfindung Wachse einerseits und anorganische Nanopartikel andererseits enthaltende Dispersionen sowie deren Verwendung, wie zuvor beschrieben.

Des weiteren betrifft die vorliegende Erfindung gleichermaßen Systeme, insbesondere Beschichtungsstoffe und Beschichtungssysteme, wie insbesondere Lacke, Farben und dergleichen, Kunststoffe, Schaumstoffe und Kosmetika, wie insbesondere Nagellacke, welche diese Dispersionen enthalten.

Schließlich betrifft die vorliegende Erfindung die Verwendung einer Kombination von Partikeln auf Basis mindestens eines organischen Materials, welches mindestens ein Wachs enthält oder hieraus besteht, insbesondere Wachspartikeln, einerseits und Partikeln auf Basis mindestens eines anorganischen Materials, insbesondere anorganische Nanopartikeln, andererseits in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen und in Dichtungsmassen.

Zur Verbesserung der mechanischen Eigenschaften von Beschichtungs- und Dispersionssystemen (so z. B. von Lacken, Farben wie Druckfarben, Beschichtungen) und von Kunststoffen, insbesondere speziell zur Verbesserung deren Verschleißeigenschaften, wie Kratzfestigkeit und Abriebfestigkeit, ist die Inkorporierung von Additiven und Füllstoffen dem Fachmann grundsätzlich bekannt.

Die aus dem Stand der Technik bekannten Füllstoffpartikel verbessern zwar unter Umständen die mechanischen Eigenschaften, wie z. B. die Kratzfestigkeit und/oder Abriebfestigkeit, der betreffenden Beschichtungssysteme (z. B. von Lacken), in denen sie eingesetzt werden; jedoch kann es nach dem Auftrag zu einer erhöhten Sprödigkeit des resultierenden Beschichtungsfilms (z. B. eines Lackfilms) kommen. Auch führt die Inkorporierung dieser Füllstoffpartikel oftmals zu einer unerwünschten Eintrübung und mangelnden Transparenz des Beschichtungssystems. Auch sind häufig relativ hohe Füllstoffgehalte erforderlich, um die gewünschten Effekte zu erreichen, was eine Stabilisierung der resultierenden Dispersionssysteme erschwert und auch aus Kostengründen unerwünscht ist.

Die WO 2007/072189 A2 betrifft eine silylierte Polymeremulsion, welche außerdem Nanosilikat enthält, und ihre Verwendung für Beschichtungssysteme. Mit den dort beschriebenen Emulsionen lassen sich jedoch nicht immer die gewünschten Anwendungseigenschaften erzielen.

Die EP 0 960 871 A2 betrifft wäßrige Zubereitungen zur Behandlung mineralischer Baustoffe, wobei die wäßrigen Zubereitungen neben einer Emulsion eines polyfunktionellen Carbosilans bzw. dessen Kondensationsproduktes, einer Emulsion eines Organopolysiloxans und einem wasserdispergierbaren oder wasseremulgierbaren organischen Polymer zusätzlich anorganische Nanopartikel enthält.

Die JP 07138484 A betrifft die Herstellung von Extrudaten aus einem Gemisch aus Wachs, Ölen oder Harzen und einem pulverförmigen anorganischen Material, wie z. B. Talkum oder Silika. Die inkorporierten zusätzlichen Komponenten sollen bei dem Extrusionsvorgang mit dem Wachs unter anderem eine verbesserte Fließfähigkeit bewirken.

Die WO 2008/093999 A1 betrifft die Verwendung und ein Verfahren zur Verwendung von Mangan(II)oxidnanopartikeln als Magnetresonanztomografie-T1-Kontrastmittel zur Verkürzung der longitudinalen Relaxationszeit T1 von Gewebe. Das Magnetresonanztomografie-T1-Kontrastmittel umfasst Mangan(II)oxidnanopartikel, welche mit einem biokompatiblen Material beschichtet sind, das wiederum an ein biologisch aktives Material, wie beispielsweise ein Tumormarker, gebunden sein kann.

Die WO 2007/146390 A2 betrifft eine Nanokompositzusammensetzung, welche mindestens ein thermoplastisches Polyamid und unmodifizierte Tonnanopartikel nach Art eines Sepiolits aufweist.

Die WO 2007/095292 A2 betrifft Polymerkomposite und Polymemanokomposite mit oberflächenmodifizierten Füllstoffen, deren Oberflächenenergie der des Polymers entspricht. Die oberflächenmodifizierten Füllstoffe besitzen eine Fließspannung und eine Viskosität von etwa 30.000 Pa/s.

Die US 2005/0136349 A1 betrifft Bauelemente für elektrofotografische bildgebende Verfahren mit einer ladungserzeugenden Schicht und einer darüber liegenden ladungstransportierenden Schicht.

Die EP 1 609 379 A1 betrifft Bekleidung für Motorradfahrer oder textile Zusatzartikel für Motorradfahrer, wobei die Oberfläche der Bekleidung bzw. der textilen Zusatzartikel teilweise den "Lotus"-Effekt aufweist. Der "Lotus"-Effekt wird durch eine auf dem textilen Material angebrachte Hydrophobierungs- oder Oleophobierungsausrüstung erreicht, welche aus einer gelförmigen Dispersion besteht. Die dispergierte Phase ist dabei grenzflächenaktiv und liegt konzentriert an der Phasengrenzschicht zwischen Ausrüstungsschicht und umgebender Atmosphäre vor.

Die US 2006/0041047 A1 betrifft umweltfreundliche, in festem Aggregatzustand vorliegende Beschichtungszusammensetzungen, welche durch Strahlung im ultravioletten und sichtbaren Bereich gehärtet werden können.

Die GB 2 410 500 A betrifft eine Versiegelung für das Ventil einer pharmazeutischen Dosiereinheit. Das Siegel besteht aus einer thermoplastischen Zusammensetzung, welche eine Elastomerenkomponente und eine thermoplastische Komponente aufweist. Darüber hinaus kann die Mischung noch weitere Additive, wie z. B. Füllstoffe, Weichmacher, Antioxidantien, Schmierstoffe und Pigmente, enthalten.

Die WO 01/75216 A1 betrifft ein Verfahren zur Applikation einer Ausrüstungsschicht auf ein textiles Trägermaterial, wobei die Ausrüstungsschicht aus einer Hydrophobierungs- oder Oleophobierungsschicht besteht. Die Hydrophobierungs- oder Oleophobierungsausrüstung umfasst eine Dispersion im Gelzustand aus mindestens einem Dispersionsmittel und mindestens einer dispergierten Phase, wobei die dispergierte Phase grenzflächenaktiv ist und an der Phasengrenzschicht zwischen Ausrüstungsschicht und umgebender Atmosphäre konzentriert vorliegt.

Weiterhin betrifft die WO 01/10635 A2 ein filmbildendes Material mit selektiv modifizierbaren Eigenschaften, welches mindestens eine Matrix mit einer Vielzahl von unterschiedlichen Substanzen aufweist. Die Substanzen sollen selektiv durch individuelle Anregung mittels Energie aktiviert werden, so dass sich die chemischen, physikalischen oder strukturellen Eigenschaften bzw. die mechanischen oder optischen Eigenschaften des Materials ändern.

Die US 2006/0147828 A1 betrifft einen Toner, welcher aus aggregierten Partikeln besteht, wobei die aggregierten Partikel zumindest aus Harzpartikeln, Pigmentpartikeln und Wachspartikeln bestehen.

Darüber hinaus betrifft die JP 2004/181864 A betrifft ein Trägermaterial für Druckprozesse. Das Trägermaterial wird mit verschiedenen funktionellen Lagen beschichtet um eine Druckplatte zu erhalten. Die Schichten, welche auf das Trägermaterial aufgetragen werden, bestehen aus einer Beschichtung der Rückseite des Trägermaterials, einer Grundierung, einer hydrophilen Schicht und einer bildgebenden Schicht.

Schließlich betrifft die JP 2006/272767 A eine mit Harz beschichtete Metallplatte. Auf die Metallplatte ist eine Schicht bzw. ein Film eines Polyurethanharzes aufgetragen, welches Silikapartikel und Polyethylenwachspartikel enthält.

Der vorliegenden Erfindung liegt nunmehr die Aufgabe zugrunde, Füllstoffpartikel der vorgenannten Art bzw. diese Füllstoffpartikel enthaltende disperse Systeme, insbesondere Dispersionen, bereitzustellen, welche sich insbesondere zum Einsatz in den vorgenannten Systemen eignen und die mit den herkömmlichen Partikeln verbundenen Nachteile zumindest weitgehend vermeiden oder aber wenigstens abschwächen.

Eine weitere Aufgabe der vorliegenden Erfindung ist darin zu sehen, neuartige disperse Systeme, insbesondere Dispersionen bereitzustellen, welche Füllstoffpartikel der eingangs genannten Art enthalten und bei ihrer Inkorporierung in die eingangs genannten Systeme eine effiziente Leistungssteigerung bewirken und sich insbesondere zur Verbesserung der mechanischen Eigenschaften von Beschichtungssystemen (so z. B. von Lacken, Farben wie Druckfarben, Beschichtungen etc.) und von Kunststoffen, insbesondere speziell zur Steigerung von deren Verschleißeigenschaften, insbesondere der Kratzfestigkeit und Abriebfestigkeit, eignen, insbesondere aber ohne dabei andere geforderte Anwendungseigenschaften dieser Systeme (wie z. B. Glanzverhalten, Oberflächenglätte, Adhäsion etc.) negativ zu beeinflussen.

Zur Lösung des zuvor geschilderten Problems schlägt die vorliegende Erfindung somit Dispersionen nach Patentanspruch 1 vor; weitere, vorteilhafte Ausgestaltungen sind Gegenstand der betreffenden Unteransprüche.

Weiterer Gegenstand der vorliegenden Erfindung ist die Verwendung der erfindungsgemäßen Dispersionen in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen und in Dichtungsmassen, wie sie in den Patentansprüchen 12 und 13 wiedergegeben ist.

Wiederum ein weiterer Gegenstand der vorliegenden Erfindung sind Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen, welche die Dispersionen nach der vorliegenden Erfindung enthalten (Patentanspruch 14).

Schließlich ist ein weiterer Gegenstand der Erfindung die Verwendung einer Kombination von Partikeln auf Basis mindestens eines organischen Materials, welches mindestens ein Wachs enthält oder hieraus besteht, insbesondere Wachspartikeln, einerseits und Partikeln auf Basis mindestens eines anorganischen Materials, insbesondere anorganische Nanopartikeln, andererseits in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen und in Dichtungsmassen (Patentanspruch 15).

Es versteht sich von selbst, daß im nachfolgenden solche Ausführungen, welche nur zu einem einzelnen Aspekt der vorliegenden Erfindung gemacht sind, gleichermaßen entsprechend auch für die anderen Aspekte der vorliegenden Erfindung gelten, ohne daß dies einer ausdrücklichen Erwähnung bedarf.

Gegenstand der vorliegenden Erfindung - gemäß einem **ersten** Aspekt der vorliegenden Erfindung - sind somit Dispersionen, wobei die Dispersionen - neben einem Dispersionsmittel - in Kombination

(a) einerseits Partikel auf Basis mindestens eines organischen Materials, welches mindestens ein Wachs enthält oder hieraus besteht, insbesondere Wachspartikel, wobei das Wachs funktionelle Gruppen enthält, wobei die funktionellen Gruppen polare Gruppen sind, welche Heteroatome aus der Gruppe von O, N und/oder S enthalten, und

(b) andererseits Partikel auf Basis mindestens eines anorganischen Materials, insbesondere anorganische Nanopartikel,

umfassen,

- wobei (a) die organischen Partikel einerseits und (b) die anorganischen Nanopartikel andererseits eine bimodale Teilchengrößenverteilung aufweisen, wobei für das Verhältnis V des mittleren Teilchendurchmessers der Partikel (a) $Ø_{Partikel\ (a)}$ zum mittleren Teilchendurchmesser der Partikel (b) $Ø_{Partikel\ (b)}$ gilt:

$$V = \frac{Ø_{Partikel\ (a)}}{Ø_{Partikel\ (b)}} > 1;$$

und

- wobei das gewichtsbezogene Verhältnis M der Partikel (b) zu den Partikeln (a) im Bereich von 0,01 bis 500 variiert.

Eine Besonderheit der vorliegenden Erfindung ist somit insbesondere darin zu sehen, daß im Rahmen der vorliegenden Erfindung (a) Partikel auf Basis mindestens eines organischen Materials, welches mindestens ein Wachs enthält oder hieraus besteht, insbesondere Wachspartikel, einerseits und (b) Partikel auf Basis mindestens eines anorganischen Materials, insbesondere anorganische Nanopartikel andererseits, in Kombination in einer einzigen Dispersion vereint werden, welche sich dann insbesondere zur Verwendung in Beschichtungsstoffen und Beschichtungssystemen, insbesondere Lacken, Farben oder dergleichen, in Dispersionen aller Art, in Kunststoffen, in Schaumstoffen, in Kosmetika, insbesondere Nagellacken, in Klebstoffen sowie in Dichtungsmassen eignet und insbesondere deren mechanische Eigenschaften verbessert.

Wie die Anmelderin überraschenderweise herausgefunden hat, wird es auf diese Weise insbesondere möglich, die zur Verbesserung von insbesondere mechanischen Eigenschaften von Beschichtungen, wie z. B. Kratzfestigkeit und Abriebfestigkeit, notwendigen Mengen der vorgenannten Inhaltsstoffe bzw. Additive (d. h. wachshaltige organische Partikel einerseits und anorganische Partikel andererseits) gegenüber den jeweiligen Einzelsystemen deutlich zu reduzieren, was auf einen Synergismus zwischen den vorgenannten Wachsmaterialien einerseits und den anorganischen Partikeln, insbesondere Nanopartikeln, andererseits schließen läßt.

Die Kombination der beiden vorgenannten Komponenten (a) und (b) verbessert dabei insbesondere die Langzeitbeständigkeit von Oberflächen gegen mechanische Beschädigungen.

Die Erfindung ermöglicht es beispielsweise, anorganische Partikel, insbesondere anorganische Nanopartikel, fein verteilt in Wachsen, anschließend in hochschmelzende und dabei zugleich in der Regel hochviskose Polymerschmelzen, wie z. B. Thermoplaste oder Pulverlacke, in einfacher Weise einzuarbeiten.

Die Kombination von anorganischen Partikeln, insbesondere anorganischen Nanopartikeln, mit Wachsen kann insbesondere auch dazu führen, daß mit Nanopartikeln beschichtete Wachspartikel an die Oberflächen von zunächst flüssigen und dann festen Polymermatrizes diffundieren und diese in der Grenzfläche positiv verändern bzw. verbessern. Für Wachspartikel als solche ist dieses Phänomen dem Fachmann seit langem bekannt.

Die erfindungsgemäße Technologie kann zur Applikation von Nanomaterialien in festen Matrizes auf Basis schmelzbarer Wachse angewendet werden.

Der zuvor geschilderte Synergismus zwischen Wachspartikeln einerseits und anorganischen Partikeln, insbesondere Nanopartikeln, andererseits kann somit in effizienter Weise zur Verbesserung beispielsweise von Lack- und Kunststoffeigenschaften genutzt werden.

Die vorliegende Erfindung stellt somit disperse anorganisch-organische Hybridsysteme mit einem partikulären, wachsbasierten organischen Material einerseits und einem partikulären, insbesondere nanopartikulären, anorganischen Material andererseits bereit.

Die erfindungsgemäßen Dispersionen vereinen im Ergebnis die positiven Eigenschaften der Wachse einerseits und des betreffenden anorganischen Materials, insbesondere von anorganischen Nanopartikeln, andererseits in einem einzigen System und führen bei ihrer Inkorporierung in Beschichtungsstoffe und Beschichtungssysteme der vorgenannten Art zu einer signifikanten Verbesserung von deren mechanischen Eigenschaften, insbesondere zu einer Steigerung der Verschleißbeständigkeit, insbesondere der Kratzfestigkeit und/oder der Abriebfestigkeit, und dies bei wesentlichem Erhalt bzw. unter Umständen sogar Verbesserung der übrigen geforderten Anwendungseigenschaften (wie z. B. Oberflächenglätte, Glanz etc.). Zudem lassen sich die erfindungsgemäßen Dispersionen homogen und stabil in die vorgenannten Systeme einarbeiten. Ihre Inkorporierung in die vorgenannten Systeme, insbesondere in Beschichtungsstoffe und Beschichtungssysteme, wie Lacke, Farben und dergleichen, führt insbesondere zu keinerlei Eintrübung der betreffenden Systeme.

Die Anmelderin hat nunmehr überraschenderweise herausgefunden, daß sich besonders gute Ergebnisse dann erhalten lassen, wenn (a) die organischen Partikel, insbesondere Wachspartikel, einerseits und (b) die anorganischen Partikel, insbesondere anorganischen Nanopartikel, andererseits eine bimodale Teilchengrößenverteilung aufweisen.

Erfindungsgemäß gilt für das Verhältnis V des mittleren Teilchendurchmessers der Partikel (a) $Ø_{Partikel\ (a)}$ zum mittleren Teilchendurchmesser der Partikel (b) $Ø_{Partikel\ (b)}$:

$$V = \frac{Ø_{Partikel\ (a)}}{Ø_{Partikel\ (b)}} > 1, \text{ insbesondere } > 2, \text{ vorzugsweise } > 3, \text{ besonders bevorzugt } > 5$$

Ganz besonders vorteilhaft verhält es sich, wenn das Verhältnis V des mittleren Teilchendurchmessers der Partikel (a) $Ø_{Partikel\ (a)}$ zum mittleren Teilchendurchmesser der Partikel (b) $Ø_{Partikel\ (b)}$ im Bereich von 1,05 bis 1.000, insbesondere 2,05 bis 500, vorzugsweise 3,05 bis 250, besonders bevorzugt 5,05 bis 100, variiert.

Was die in den erfindungsgemäßen Dispersionen enthaltenen organischen Partikel (a), insbesondere Wachspartikel, anbelangt, so kann deren Teilchengröße in weiten Bereichen variieren. Im allgemeinen weisen die organischen Partikel (a), insbesondere Wachspartikel, Teilchengrößen im Bereich von 5 nm bis 500 µm, insbesondere 10 nm bis 200 µm, vorzugsweise 20 nm bis 150 µm, weiter bevorzugt 30 nm bis 125 µm, besonders bevorzugt 50 nm bis 100 µm, auf. Die Bestimmung der Teilchengrößen kann beispielsweise mittels Transmissionselektronenmikroskopie, analytische Ultrazentrifugation oder durch Methoden der Lichtstreuung erfolgen.

Was die in den erfindungsgemäßen Dispersionen enthaltenen anorganischen Partikel (b) anbelangt, so kann deren Teilchengröße gleichermaßen in weiten Bereichen variieren. Im allgemeinen weisen die anorganischen Partikel (b) Teilchengrößen im Bereich von 0,5 bis 1.000 nm, insbesondere 2 bis 800 nm, vorzugsweise 5 bis 700 nm, weiter bevorzugt 10 bis 600 nm, besonders bevorzugt 15 bis 500 nm, ganz besonders bevorzugt 20 bis 100 nm, auf. Wie zuvor beschrieben, kann die Bestimmung der Teilchengrößen beispielsweise mittels Transmissionselektronenmikroskopie, analytische Ultrazentrifugation oder durch Methoden der Lichtstreuung erfolgen.

Es versteht sich von selbst, daß bei allen im Rahmen der vorliegenden Erfindung angegebenen Größen- und Bereichsangaben es einzelfallbedingt oder anwendungsbezogen erforderlich sein kann, hiervon abzuweichen, ohne daß der Rahmen der vorliegenden Erfindung verlassen ist.

Weiterhin hat die Anmelderin nunmehr überraschenderweise herausgefunden, daß sich besonders gute Ergebnisse dann erhalten lassen, wenn in den erfindungsgemäßen Dispersionen das gewichtsbezogene Verhältnis M der Partikel (b) zu den Partikeln (a) mindestens 0,01, insbesondere mindestens 0,5, vorzugsweise mindestens 1, besonders bevorzugt mindestens 2, beträgt.

Erfindungsgemäß variiert in den erfindungsgemäßen Dispersionen das gewichtsbezogene Verhältnis M der Partikel (b) zu den Partikeln (a) im Bereich von 0,01 bis 500, insbesondere 0,5 bis 250, vorzugsweise 1 bis 150, besonders bevorzugt 5 bis 100.

Was die Menge an in den erfindungsgemäßen Dispersionen enthaltenen organischen Partikeln (a), insbesondere Wachspartikeln, anbelangt, so kann diese Menge in weiten Bereichen variieren. Im allgemeinen enthalten die erfindungsgemäßen Dispersionen die wachshaltigen Partikel (a), bezogen auf die Dispersionen, in Mengen von 0,01 bis 30 Gew.-%, insbesondere 0,05 bis 20 Gew.-%, vorzugsweise 0,1 bis 15 Gew.-%, besonders bevorzugt 0,1 bis 10 Gew.-%, ganz besonders bevorzugt 0,2 bis 5 Gew.-%.

Was die Menge an in den erfindungsgemäßen Dispersionen enthaltenen anorganischen Partikeln (b) anbelangt, so kann diese Menge gleichermaßen in weiten Bereichen variieren. Im allgemeinen enthalten die erfindungsgemäßen Dispersionen die anorganischen Partikel (b), bezogen auf die Dispersionen, in Mengen von 0,01 bis 50 Gew.-%, insbesondere 0,1 bis 40 Gew.-%, vorzugsweise 0,2 bis 30 Gew.-%, besonders bevorzugt 0,3 bis 20 Gew.-%, ganz besonders bevorzugt 0,5 bis 10 Gew.-%.

Was das anorganisch basierte Material der Partikel (b) anbelangt, so kann dieses aus mindestens einem gegebenenfalls dotierten anorganischen Oxid (z. B. $TiO_2$, ZnO, $Al_2O_3$, $SiO_2$, $CeO_2$, $Fe_2O_3$, $Fe_3O_4$ etc.), Hydroxid (z. B. $Al[OH]_3$ etc.), Oxidhydroxid (z. B. AlOOH etc.), Sulfat (z. B. Erdalkalisulfate, wie Bariumsulfat, Calciumsulfat etc.), Phosphat (z. B. Erdalkaliphosphat, wie Calciumphosphat, oder Lanthanphosphat etc.), Sulfid (z. B. Cadmiumsulfid, Zinksulfid etc.), Selenid, Tellurid, Vanadat (z. B. $BiVO_4$ oder $YVO_4:Eu^{3+}$), Wolframat (z. B. $CaWO_4$ oder $Yb_2(WO_4)_3$), Titanat (z. B. $BaTiO_3$), Fluorid (z. B. $CaF_2$, $CaF_2:Eu^{2+}$, $NaYF_4$ oder $YbF_3:Yb^{3+},Er^{3+}$), Apatit, Borat, Carbonat (z. B. Erdalkalicarbonat,

wie Magnesiumcarbonat oder Calciumcarbonat etc.), Nitrid (z. B. AlN, $Si_3N_4$ etc.), Silikat (z. B. Erdalkalisilikat, wie Calciumsilikat, Schicht- und Phyllosilikaten etc.), Zeolith, Carbid (z. B. SiC etc.), einwandigen oder mehrwandigen Carbonanotubes und/oder Metall/Element (z. B. Silber, Kupfer, Fulleren), intermetallischen Phasen, oder aber aus Mischungen oder Kombinationen solcher Verbindungen gebildet sein oder diese Verbindung(en) enthalten.

Vorteilhafterweise ist das vorgenannte anorganisch basierte Material der Partikel (b) aus der Gruppe von gegebenenfalls dotierten anorganischen Oxiden, Hydroxiden, Oxidhydroxiden, Sulfaten, Phosphaten, Sulfiden, Seleniden, Telluriden, Fluoriden, Apatiten, Zeolithen, Carbonaten, Nitriden, Silikaten, Carbiden und/oder Metallen/Elementen in dem betreffenden Medium schwerlöslich ausgebildet.

Insbesondere kann das anorganisch basierte Material der Partikel (b) aus mindestens einem gegebenenfalls dotierten Oxid, Hydroxid, Oxidhydroxid, Sulfat, Phosphat, Sulfid, Selenid, Tellurid, Fluorid, Apatit, Carbonat, Nitrid, Silikat, Carbid mindestens eines Metalls oder Halbmetalls oder aber aus Zeolithen oder aber aus Metallen oder aber aus Mischungen oder Kombinationen solcher Verbindungen gebildet sein oder diese Verbindung(en) enthalten.

Vorzugsweise kann das anorganisch basierte Material der anorganischen Partikel (b) aus mindestens einem gegebenenfalls dotierten Oxid, Hydroxid und/oder Oxidhydroxid des Aluminiums, Siliziums, Zinks, Titans, Cers und/oder Eisens, einem gegebenenfalls dotierten Erdalkalisulfat, einem gegebenenfalls dotierten Erdalkali-, Übergangsmetall- oder Lanthanoidphosphat, einem gegebenenfalls dotierten Alkali-, Erdalkali-, Übergangsmetall- oder Lanthanoidvanadat, einem gegebenenfalls dotierten Alkali-, Erdalkali-, Übergangsmetall- oder Lanthanoidfluorid, einem Cadmium- oder Zinksulfid, einem Zinkselenid oder Cadmiumselenid, einem Cadmiumtellurid oder Bismuttellurid, einem gegebenenfalls dotierten Erdalkalicarbonat, einem Aluminium- oder Siliziumnitrid, einem gegebenenfalls dotierten Erdalkalisilkat, einem Siliciumcarbid , Silber, Kohlenstoffallotropen oder aber aus Mischungen oder Kombinationen solcher Verbindungen gebildet sein oder diese Verbindung(en) enthalten.

Besonders bevorzugt für die Ausbildung des anorganisch basierten Materials der anorganischen Partikel (b) sind die folgenden Verbindungen: $TiO_2$, ZnO, $Al_2O_3$, $SiO_2$, $CeO_2$, $Fe_2O_3$, $Fe_3O_4$, $Al(OH)_3$, Al(O)OH, Erdalkalisulfate (z. B. Bariumsulfat, Calciumsulfat etc.), Erdalkaliphosphate (z. B. Calciumphosphat), gegebenenfalls dotiertes $YVO_4$, $NaYF_4$:Yb,Er, gegebenenfalls dotiertes YbF, gegebenenfalls dotiertes $CaF_2$, gegebenenfalls dotiertes Cerphosphat, gegebenenfalls dotiertes Lanthanphosphat, Zinkphosphat, Bariumtitanat, Antimon-Zinn-Oxid, Indium-Zinn-Oxid, Kupferoxid, gegebenenfalls dotiertes $CaWO_4$, gegebenenfalls dotiertes $Yb_2(WO_4)_3$, gegebenenfalls dotiertes $Y_2(WO_4)_3$, Cadmiumsulfid, Zinksulfid, Erdalkalicarbonat (z. B. Magnesiumcarbonat, Calciumcarbonat etc.), AlN, $Si_3N_4$, Erdalkalisilikate (z. B. Calciumsilikat etc.), SiC, Kohlenstoffnanoröhren und/oder Silber sowie Mischungen oder Kombinationen solcher Verbindungen.

Ganz besonders bevorzugt ist es, wenn das anorganisch basierte Material der anorganischen Partikel (b) aus Aluminiumoxid, Siliziumdioxid, Zinkoxid, Ceroxid, Böhmit und/oder Titandioxid gebildet ist oder diese Verbindung(en) enthält.

Gemäß einer besonderen Ausführungsform kann es vorgesehen sein, daß das anorganisch basierte Material der anorganischen Partikel (b) oberflächenmodifiziert ausgebildet ist, wobei eine derartige Oberflächenmodifizierung vorteilhafterweise mittels Polysiloxangruppen erfolgt, d. h. an bzw. auf der Oberfläche des anorganisch basierten Materials der anorganischen Partikel (b) sind bei dieser Ausführungsform Polysiloxangruppen aufgebracht, vorzugsweise mittels physikalischer und/oder chemischer, insbesondere chemischer kovalenter Bindung.

Die entsprechende Oberflächenmodifizierung mittels Polysiloxangruppen bewirkt eine noch weitergehende Steigerung bzw. Verbesserung der Anwendungseigenschaften der erfindungsgemäßen Dispersionen, insbesondere wenn sie in Beschichtungsstoffe und Beschichtungssysteme eingearbeitet werden. Insbesondere führt die Oberflächenmodifizierung, vorzugsweise mit Polysiloxangruppen, zu einer verringerten Sedimentations- und Gelbildungsneigung der erfindungsgemäßen Dispersionen. Auch wird einer Versprödung des abgetrockneten bzw. ausgehärteten Beschichtungssystems effizient entgegengewirkt. Die Oberflächenmodifizierung hat weiterhin den Vorteil, daß bei Einarbeitung in Beschichtungssysteme die Wechselwirkung mit dem Bindemittel vorteilhaft beeinflußt wird und auf diese Weise Transparenz und Brechungsindex gegenüber nicht oberflächenmodifizierten Partikeln noch weiter verbessert werden, insbesondere infolge des verringerten Brechungsindexunterschiedes eine deutlich geringere Lichtstreuung eintritt.

Die Oberflächenmodifizierung, insbesondere mittels Polysiloxangruppen, ist dem Fachmann grundsätzlich aus dem Stand der Technik bekannt. Diesbezüglich kann auf die auf die Anmelderin selbst zurückgehenden Patentanmeldungen DE 10 2005 006 870 A1 bzw. EP 1 690 902 A2 und DE 10 2007 030 285 A1 bzw. PCT/EP 2007/006273 verwiesen werden, deren gesamter Offenbarungsgehalt hiermit durch Bezugnahme eingeschlossen ist. Alle vorgenannten Druckschriften betreffen die Oberflächenmodifizierung von metall- oder halbmetalloxidischen oder hydroxidischen Oberflächen mittels Polysiloxanen, vorteilhafterweise durch Ausbildung chemischer, insbesondere kovalenter Bindungen.

Was das organisch basierte Material der wachsbasierten organischen Partikel (a) anbelangt, so ist dieses organisch basierte Material aus mindestens einem Wachs gebildet bzw. enthält ein solches Wachs. Dabei kann das Wachs insbesondere ausgewählt sein aus der Gruppe von (i) natürlichen Wachsen, insbesondere pflanzlichen, tierischen und Mineralwachsen; (ii) chemisch modifizierten Wachsen; (iii) synthetischen Wachsen; sowie deren Mischungen.

Gemäß einer besonders bevorzugten Ausführungsform der vorliegenden Erfindung wird als organisch basiertes Material der wachsbasierten organischen Partikel (a) ein synthetisches Wachs, insbesondere ein polyolefinbasiertes Wachs, vorzugsweise ein Wachs auf Basis eines oxidierten Polyolefins, eingesetzt.

Was den Begriff des Wachses anbelangt, so handelt es sich hierbei um eine phänomenologische Bezeichnung für eine Reihe natürlich oder künstlich bzw. synthetisch gewonnener Stoffe, welche in der Regel folgende Eigenschaften aufweisen: Wachse sind bei 20 °C knetbar, fest bis brüchig-hart, grob bis feinkristallin, durchscheinend bis opak, jedoch nicht glasartig, über 40°C ohne Zersetzung schmelzend, jedoch schon wenig oberhalb des Schmelzpunktes verhältnismäßig niedrigviskos und im allgemeinen bzw. vorteilhafterweise nicht fadenziehend, weisen eine stark temperaturabhängige Konsistenz und Löslichkeit auf und sind unter leichtem Druck polierbar. Ist mehr als eine der zuvor aufgeführten Eigenschaften nicht erfüllt, ist dieser Stoff nach der DGF (Deutsche Gesellschaft für Fettwissenschaften) kein Wachs (vgl. DGF-Einheitsmethode M-I 1 (75)).

Wachse unterscheiden sich von ähnlichen synthetischen oder natürlichen Produkten (z. B. Harzen, plastischen Massen, Metallseifen etc.) hauptsächlich darin, daß sie im allgemeinen etwa zwischen 50 und 90 °C, in Ausnahmefällen auch bis etwa 200 °C, in den schmelzflüssigen, niedrigviskosen Zustand übergehen und praktisch frei von aschebildenden Verbindungen sind.

Wachse bilden Pasten oder Gele und brennen in der Regel mit rußender Flamme.

Nach ihrer Herkunft unterteilt man die Wachse in drei Gruppen ein, nämlich (i) natürliche Wachse, hierunter pflanzliche Wachse (z. B. Candelillawachs, Carnaubawachs, Japanwachs, Espartograswachs, Korkwachs, Guarumawachs, Reiskeimölwachs, Zuckerrohrwachs, Ouricurywachs, Montanwachs etc.), tierische Wachse (z. B. Bienenwachs, Schellackwachs, Walrat, Lanolin bzw. Wollwachs, Bürzelfett etc.) und Mineralwachse (z. B. Ceresin, Ozokerit bzw. Erdwachs etc.); (ii) chemisch modifizierte Wachse, hierunter Hartwachse (z. B. Montanesterwachse, Sasolwachse, hydrierte Jojobawachse etc.); sowie (iii) synthetische Wachse, hierunter Polyalkylenwachse, Polyalkylenglykolwachse (z. B. Polyethylenglykolwachse) etc.

Hauptbestandteil natürlicher rezenter ("nachwachsender") Wachse sind Ester langkettiger Fettsäuren (Wachssäuren) mit langkettigen Fettalkoholen, Triterpen- oder Steroidalkoholen; diese Wachsester enthalten auch freie Carboxyl- und/oder Hydroxylgruppen, welche das Emulgiervermögen der sogenannten Wachsseifen bewirken. Natürliche fossile Wachse, z. B. aus Braunkohle oder Erdöl, bestehen — ebenso wie Wachse aus der Fischer-Tropsch-Synthese oder Polyalkylenwachse (z. B. Polyethylenwachse) - hauptsächlich aus geradkettigen Kohlenwasserstoffen; erstere können aber je nach Provenienz auch verzweigte oder cycloaliphatische Kohlenwasserstoffe enthalten. Häufig werden diese "Kohlenwasserstoff'-Wachse durch nachträgliche Oxidation oder im Fall der Polyolefinwachse auch durch Comonomere mit Carboxylgruppen funktionalisiert.

Zu weitergehenden Einzelheiten zum Begriff der Wachse kann beispielsweise verwiesen werden auf Römpp Chemielexikon, 10. Auflage, Band 6, 1999, Georg Thieme Verlag Stuttgart/New York, Seite 4906, Stichwort: "Wachse" sowie die dort referierte Literatur, insbesondere Cosm. Toil. 101, 49 (1986) sowie DGF-Einheitsmethoden, Abteilung M-Wachse und Wachsprodukte, 7. Ergänzungslieferung 05/1999, Stuttgart: Wissenschaftliche Verlagsgesellschaft, wobei die vorgenannten Literaturstellen hiermit durch Bezugnahme vollinhaltlich in die vorliegende Anmeldung eingeschlossen sind. Erfindungsgemäß bevorzugt ist es, wenn als organisch basiertes Material der wachsbasierten organischen Partikel (a) ein Wachs eingesetzt wird, welches funktionelle Gruppen enthält. Erfindungsgemäß handelt es sich bei den funktionellen Gruppen um polare Gruppen, welche Heteroatome aus der Gruppe von O, N und/oder S, bevorzugt O, enthalten, vorzugsweise Hydroxylgruppen, Polyethergruppen, insbesondere Polyalkylenoxidgruppen, und/oder Carboxylgruppen, besonders bevorzugt Polyethergruppen und/oder Hydroxylgruppen. Die funktionellen Gruppen dieser Wachse bewirken eine verbesserte bzw. stabilere Adhäsion.

Grundsätzlich können die erfindungsgemäßen Dispersionen wäßrig basiert ausgebildet sein bzw. als Dispersionsmittel Wasser enthalten.

Daneben besteht grundsätzlich aber auch die Möglichkeit, daß die erfindungsgemäßen Dispersionen organisch basiert ausgebildet sein können bzw. als Dispersionsmittel mindestens ein organisches Lösemittel enthalten.

Darüber hinaus können die Dispersionen nach der vorliegenden Erfindung außerdem mindestens einen weiteren Inhaltsstoff und/oder mindestens ein Additiv enthalten, welcher bzw. welches insbesondere ausgewählt sein kann aus der Gruppe von Emulgatoren, Netzmitteln, Antioxidationsmitteln, Stabilisatoren, Neutralisationsmitteln, Verdickungsmitteln, Dispergiermitteln, organischen Lösemitteln, Lösungsvermittlern und Bioziden sowie deren Mischungen.

Die Dispersionen nach der vorliegenden Erfindung können beispielsweise als Beschichtungsmittel oder Beschichtungssysteme, insbesondere Lacke, Farben oder dergleichen, als Kosmetika, insbesondere Nagellacke, als Klebstoffe und als Dichtungsmassen ausgebildet sein bzw. vorliegen.

Gleichermaßen können die Dispersionen nach der vorliegenden Erfindung zur Inkorporierung in Beschichtungsstoffe und Beschichtungssysteme, insbesondere Lacke, Farben oder dergleichen, in Kunststoffe, in Schaumstoffe, in Kosmetika, insbesondere Nagellacke, in Klebstoffe und in Dichtungsmassen konzipiert sein. Üblicherweisen werden zu diesem Zweck die Dispersionen nach der vorliegenden Erfindung in Mengen von 0,1 bis 30 Gew.-%, insbesondere 0,5 bis 20 Gew.-%, vorzugsweise 1 bis 10 Gew.-%, bezogen auf das resultierende Gesamtsystem, eingesetzt.

Was das Verfahren zur Herstellung der Dispersionen nach der vorliegenden Erfindung anbelangt, so kann erfindungsgemäß wie folgt vorgegangen werden: Zur Herstellung der erfindungsgemäßen Dispersionen können beispielweise geschmolzene Wachse, Wachsdispersionen oder Wachsemulsionen mit anorganischen Partikeln, insbesondere anorganischen Nanopartikeln, beispielsweise in Form von anorganischen Partikeldispersionen in Wasser oder organischen Lösemitteln, entweder gemischt werden und dann in ihrer Kombination in Form der Dispersion sozusagen als bereits fertig kombiniertes Additiv z. B. einem Lack, einer Druckfarbe, einem Kunststoff oder dergleichen zugesetzt werden oder aber alternativ in diesen Applikationen in situ eingemischt werden, d. h. als Kombination zweier Additive eingesetzt werden. Dabei weist die Kombination von anorganischen Nanopartikeln einerseits und Wachspartikeln andererseits eine bimodale Teilchengrößenverteilung aus einem größeren organischen Material in Kombination mit einem feinteiligeren anorganischen Material auf, wie zuvor beschrieben. Die Verteilung bzw. Mischung bzw. Homogenisierung von anorganischen Partikeln, insbesondere Nanopartikeln, mit Wachsen kann beispielsweise durch Eintrag der erforderlichen Energie, insbesondere durch einfaches, z. B, scherkraftarmes Rühren bzw. Mischen, aber insbesondere auch durch Verwendung von Dissolvem, Dispermaten, Perl- und Kugelmühlen, Ultraschall etc., gegebenenfalls unter zusätzlicher Verwendung von Netz- und Dispergieradditiven, wie zuvor beschrieben, erfolgen. Während die Teilchengröße der anorganischen Partikel im allgemeinen durch das eingesetzte Ausgangsmaterial vorgegeben ist, kann die Teilchengröße der wachsbasierten Partikel entweder durch Auswahl des eingesetzten Ausgangmaterials (z. B. Wachsdispersionen oder Wachsemulsionen oder mikronisierte Wachse) vorgegeben werden oder aber durch die eingetragene Energie (z. B. Scherkräfte etc.) gezielt eingestellt werden. Geeignete Ausgangsmaterialien sind handelsüblich und stehen dem Fachmann in ausreichender Auswahl und Variabilität zur Verfügung.

Bezüglich weitergehender Einzelheiten zur Herstellung der erfindungsgemäßen Dispersionen kann zur Vermeidung unnötiger Wiederholungen auf die vorstehenden Ausführungen zu den erfindungsgemäßen Dispersionen verwiesen werden, welche in bezug auf das Herstellungsverfahren in gleicher Weise gelten, und auf die noch nachfolgenden Ausführungsbeispiele verwiesen werden.

Weiterer Gegenstand der vorliegenden Erfindung - gemäß einem **zweiten** Aspekt der vorliegenden Erfindung - ist die Verwendung der erfindungsgemäßen Dispersionen in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen sowie in Dichtungsmassen.

Insbesondere können die erfindungsgemäßen Dispersionen dazu eingesetzt werden, zur Verbesserung der mechanischen Eigenschaften, insbesondere zur Steigerung der Verschleißbeständigkeit, vorzugsweise der Kratzfestigkeit und/oder Abriebfestigkeit, in den vorgenannten Systemen beizutragen.

Weiterer Gegenstand der vorliegenden Erfindung - gemäß einem **drit** - **ten** Aspekt der vorliegenden Erfindung - sind Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen, welche die erfindungsgemäßen Dispersionen enthalten.

Üblicherweisen werden gemäß diesem Erfindungsaspekt die Dispersionen nach der vorliegenden Erfindung in Mengen von 0,1 bis 30 Gew.-%, insbesondere 0,5 bis 20 Gew.-%, vorzugsweise 1 bis 10 Gew.-%, bezogen auf das resultierende Gesamtsystem, eingesetzt.

Weiterer Gegenstand der vorliegenden Erfindung - gemäß einem **vierten** Aspekt der vorliegenden Erfindung - ist die Verwendung einer Kombination von

(a) Partikeln auf Basis mindestens eines organischen Materials einerseits, welches mindestens ein Wachs enthält oder hieraus besteht, insbesondere Wachspartikeln, wobei das Wachs funktionelle Gruppen enthält, wobei die funktionellen Gruppen polare Gruppen sind, welche Heteroatome aus der Gruppe von O, N und/oder S enthalten, und

(b) Partikeln auf Basis mindestens eines anorganischen Materials, insbesondere anorganische Nanopartikeln, andererseits

in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen und in Dichtungsmassen,

- wobei (a) die organischen Partikel einerseits und (b) die anorganischen Nanopartikel andererseits eine bimodale Teilchengrößenverteilung aufweisen, wobei für das Verhältnis V des mittleren Teilchendurchmessers der Partikel (a) $Ø_{Partikel\ (a)}$ zum mittleren Teilchendurchmesser der Partikel (b) $Ø_{Partikel\ (b)}$ gilt:

$$V = \frac{\varnothing_{Partikel\,(a)}}{\varnothing_{Partikel\,(b)}} > 1;$$

und

- wobei das gewichtsbezogene Verhältnis M der Partikel (b) zu den Partikeln (a) im Bereich von 0,01 bis 500 variiert.

Insbesondere kann die erfindungsgemäße Kombination dazu eingesetzt werden, zur Verbesserung der mechanischen Eigenschaften, insbesondere zur Steigerung der Verschleißbeständigkeit, vorzugsweise der Kratzfestigkeit und/oder Abriebfestigkeit, in den vorgenannten Systemen beizutragen.

Mit den erfindungsgemäßen Dispersionen werden organisch-anorganisch basierte Hybridsysteme auf Basis organischer Wachspartikel einerseits und anorganischer Partikel, insbesondere anorganischer Nanopartikel, andererseits bereitgestellt, welche bei ihrer Inkorporierung in die vorgenannten Systeme zu einer deutlichen Leistungssteigerung, insbesondere zu einer signifikanten Verbesserung der mechanischen Eigenschaften, insbesondere der Verschleißbeständigkeit, vorzugsweise der Kratzfestigkeit und/oder Abriebfestigkeit, führen. Dabei bewirkt die gemeinsame Inkorporierung organischer Wachspartikel einerseits und anorganischer Partikel, insbesondere anorganischer Nanopartikel, andererseits ein synergistisches Zusammenwirken dahingehend, daß gegenüber der alleinigen Verwendung die betreffenden Mengen zur Erzielung desselben Effekts deutlich reduziert werden können bzw. bei gleichen Mengen ein gesteigert Effekt bewirkt wird.

Durch die vorliegende Erfindung ist es somit gelungen, die Anwendungsvorteile anorganisch basierter Nanopartikel einerseits und wachshaltiger Partikel andererseits in einer einzigen Dispersion zu vereinen. Insbesondere bewirken die erfindungsgemäßen Dispersionen bei ihrer Inkorporierung in die vorgenannten Systeme (d. h. Beschichtungsstoffe und Beschichtungssysteme, insbesondere Lacke, Farben oder dergleichen, Kunststoffe, Schaumstoffe, Kosmetika, insbesondere Nagellacke, Klebstoffe und Dichtungsmassen) eine effiziente Leistungssteigerung und eignen sich insbesondere zur Verbesserung von deren mechanischen Eigenschaften, insbesondere von Verschleißeigenschaften, wie Kratzfestigkeit und Abriebfestigkeit, insbesondere aber ohne daß dabei andere geforderte Anwendungseigenschaften dieser Systeme negativ beeinflußt werden (z. B. Glanzverhalten, Oberflächenglätte, Adhäsionsvermögen etc.).

Auf diese Weise werden wirksame Füllstoffe für die vorgenannten Systeme bereitgestellt, welche beispielsweise bei Inkorporierung in Beschichtungssysteme (z. B. Lacke und Farben) die mechanischen Eigenschaften der Beschichtung, wie z. B. Abrieb- und Kratzfestigkeit, effizient verbessern.

Im Rahmen der vorliegenden Erfindung werden im Ergebnis (a) Partikel auf Basis mindestens eines organischen Materials, welches mindestens ein Wachs enthält oder hieraus besteht, insbesondere Wachspartikel, einerseits und (b) Partikel auf Basis mindestens eines anorganischen Materials, insbesondere anorganische Nanopartikel andererseits, in Kombination in einer einzigen Dispersion vereint, welche sich dann insbesondere zur Verwendung in Beschichtungsstoffe und Beschichtungssysteme, insbesondere Lacken, Farben oder dergleichen, in Dispersionen aller Art, in Kunststoffen, in Schaumstoffen, in Kosmetika, insbesondere Nagellacken, in Klebstoffen sowie in Dichtungsmassen eignet und insbesondere deren mechanische Eigenschaften verbessert. Überraschenderweise wird es auf diese Weise insbesondere möglich, die zur Verbesserung von insbesondere mechanischen Eigenschaften von Beschichtungen, wie z. B. Kratzfestigkeit und Abriebfestigkeit, notwendigen Mengen der vorgenannten Inhaltsstoffe bzw. Additive (d. h. wachshaltige organische Partikel einerseits und anorganische Partikel andererseits) gegenüber den jeweiligen Einzelsystemen deutlich zu reduzieren, was auf einen Synergismus zwischen den vorgenannten Wachsmaterialien einerseits und den anorganischen Partikeln, insbesondere Nanopartikeln, andererseits zurückzuführen ist.

Der zuvor geschilderte Synergismus zwischen Wachspartikeln einerseits und anorganischen Partikeln, insbesondere Nanopartikeln, andererseits kann somit in effizienter Weise zur Verbesserung beispielsweise von Lack- und Kunststoffeigenschaften genutzt werden.

Wie zuvor beschrieben, verbessern die erfindungsgemäßen Dispersionen die mechanischen Eigenschaften von Beschichtungen im Vergleich zu reinen Wachsemulsionen oder zu reinen anorganischen Nanopartikeldispersionen in signifikanter Weise.

Im Vergleich zu den einzelnen Bestandteilen, d. h. Wachspartikeln einerseits und anorganischen Nanopartikel andererseits, zeigen die erfindungsgemäßen Dispersionen einen synergistischen Wirkeffekt, insbesondere in bezug auf die mechanischen Eigenschaften der Beschichtungen, so daß die Gesamtmenge an zu inkorporierenden Partikeln im Vergleich zu den reinen Materialien, insbesondere im Vergleich zu reinen anorganischen Nanopartikeldispersionen, deutlich reduziert werden kann.

Die erfindungsgemäßen Dispersionen sind ausgesprochen breit anwendbar. Die breite Anwendbarkeit in Kombination mit der außerordentlich guten Effizienz der erfindungsgemäßen Dispersionen übertreffen Dispersionen des

Standes der Technik bei weitem.

Die Anwendung der erfindungsgemäßen Dispersionen kann beispielsweise durch Zugabe in bestehende Systeme, welche z. B. zu Lacken, Klebestoffen, Kunststoffen etc. weiterverarbeitet werden, erfolgen. Durch die Zugabe bereits kleiner Mengen der erfindungsgemäßen Dispersionen wird eine außerordentlich erhöhte mechanische Beständigkeit erzielt. Überraschenderweise werden die übrigen Verarbeitungseigenschaften der betreffenden Systeme, insbesondere Lacke, Kunststoffe etc., nicht bzw. nicht signifikant beeinflußt, so daß keine neue Optimierung der übrigen Parameter bei diesen Anwendungen zu erfolgen hat.

Die erfindungsgemäßen Dispersionen eigenen sich daher in hervorragender Weise für den Einsatz in Beschichtungsmaterialien aller Art, Kunststoffen, Klebstoffen, Dichtungsmassen etc.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

## AUSFÜHRUNGSBEISPIELE:

### Herstellung erfindungsgemäßer Dispersionen

### Beispiel 1: Herstellung einer wässrigen Nanopartikeldispersion

In 174 g Wasser werden 6 g eines polymeren Netz- und Dispergieradditives mit pigmentaffinen Gruppen eingemischt. Zu dieser Mischung werden unter Rühren 120 g eines handelsüblichen Aluminiumoxidnanopulvers mit einer Primärpartikelgröße von d50 = 40 nm zugegeben. Diese Mischung wird nunmehr nach Zugabe von 250 ml Glasperlen (Durchmesser 1 mm) mittels eines Dispermaten für 3 h bei ca. 2000 U/min dispergiert. Anschließend werden die Glasperlen abgesiebt und die so erhaltene Dispersion ist fertig.

### Beispiel 2: Herstellung einer lösemittelbasierten Nanopartikeldispersion

In 262 g unpolarem Lösemittel (Exxsol D60) werden 18 g eines polymeren Netz- und Dispergieradditives mit pigmentaffinen Gruppen aufgelöst. Zu dieser Mischung werden unter Rühren 120 g eines handelsüblichen Böhmits mit einer Primärpartikelgröße von d50 = 10 nm zugegeben. Diese Mischung wird nunmehr mittels Ultraschall für 2 Stunden dispergiert. Die so erhaltene Dispersion ist für mehrere Monate stabil.

### Beispiel 3: Herstellung einer Wachsemulsion

In einer druckfesten Apparatur werden zu 150 g Wasser, in dem 1,3 g eines niedermolekularen anionischen Tensids gelöst sind, unter Einsatz hoher Scherkräfte durch z.B. eine Dissolverscheibe 50 g eines geschmolzenen, oxidierten PE Wachses langsam zugeben, so daß sich eine stabile Öl-Wasser-Emulsion bildet. Die finale Größe der Wachspartikel in der Dispersion (aufgrund des Herstellverfahrens auch Emulsion genannte) Tröpfchengröße wird durch Lichtstreuung mit d50 = 50 nm bestimmt.

### Beispiel 4: Herstellung einer Wachsdispersion

In einer druckfesten Apparatur werden 60 g eines Carnaubawachses in 320 g Solventnaphta unter Erwärmen gelöst. Im Anschluß werden 80 g n-Butanol zu der Mischung unter intensivem Rühren zugegeben. Das in dieser Mischung unlösliche Wachs fällt in Form von 10 μm großen Wachspartikeln (d50) aus. Die so erhaltene Dispersion ist für mehrere Monate stabil.

### Beispiel 5: Herstellung einer Nano-Wachs-Vormischung

Zu der in Beispiel 1 hergestellten Nanodispersion wird in einem Dissolver (2000 U/min) unter Verwendung einer Zahnscheibe kontinuierlich die erforderlich Menge zur Erreichung des gewünschten Wachs/Nanoaluminiumoxid-Verhältnisses und Dispersion-3 zugegeben. Nach vollständiger Zugabe wird die Mischung weitere 20 min homogenisiert.

Nach den zuvor beschriebenen Methoden wurden erfindungsgemäße Dispersionen mit variierenden Mengen an Wachs- und anorganischen Nanopartikeln hergestellt.

Die Anmelderin hat überraschenderweise gefunden, daß es besonders vorteilhaft ist, die so erhaltenen Dispersionen mit anorganischen Nanopartikeln und die Dispersionen oder Emulsionen mit Wachspartikeln zu mischen,

bevor man sie den späteren Beschichtungsmaterialien aller Art, Kunststoffen, Klebstoffen, Dichtungsmassen etc. zusetzt. Bei der Mischung tritt eine Kombination aus Wachspartikeln und anorganischen Nanopartikeln ein, die zu den bereits erwähnten synergistischen Effekten beiträgt.

Die auf diese Weise erhaltenen Dispersionen wurden nachfolgend in ein Zweikomponenten-PU-Beschichtungssystem inkorporiert und anschließend auf ihre Anwendungseigenschaften in bezug auf die Beschichtung, insbesondere Glanz, Kratzfestigkeit und Gleitfähigkeit, getestet. Gegenüber einer reinen Wachsemulsion oder aber einer reinen Nanopartikeldispersion zeigen die erfindungsgemäßen Dispersionen insbesondere eine verbesserte Kratz- und Abriebfestigkeit. Die Ergebnisse sind in der nachstehenden Tabelle zusammengefaßt.

**Anwendungstests:**

Mit Ausnahme der Kontrollprobe und der mit dem reinen Wachs beschichteten Proben enthalten alle übrigen Proben in der Beschichtungsmasse die erfindungsgemäßen Dispersionen.

Die Kratzfestigkeit wurde nach der sogenannten Satra-Testmethode nach 500, 1.000, 2.000 bzw. 4.000 Zyklen bestimmt, wobei die Bewertung der resultierenden Abriebfestigkeit nach einem Schulnotensystem mit Bewertungsnoten von 1 bis 5 erfolgte (1 = sehr gut bis 5 = mangelhaft). Hierzu wurden jeweils die Beschichtungen in gleicher Schichtstärke aufgetragen und unter gleichen Bedingungen 24 Stunden austrocknen und aushärten gelassen. Nachfolgend wird nach weiterer 3tägiger Lagerung der Kratzfestigkeitstest nach Satra unter für den Fachmann an sich bekannten Bedingungen mittels einer auf der Oberfläche der Beschichtungen rotierenden Abriebscheibe mit den vorgenannten Zyklen durchgeführt.

Die Bestimmung des Glanzwertes erfolgte nach DIN EN 67530 entsprechend ISO 2813 unter einem Winkel von 60°.

Die Messung der Oberflächenglätte ("Slip") erfolgte durch Messung der Gleiteigenschaften über die prozentuale Reduzierung des Gleitwiderstandes. Bei dieser Meßmethode wird die Reibungskraft eines definierten Gegenstandes auf der Beschichtungsoberfläche gemessen; hierbei wird ein 500 g Gewichtsstein mit einer definierten Filzunterlage von einer Zugmaschine über die Lackoberfläche mit konstanter Geschwindigkeit geschoben. Die dazu benötigte Kraft wird mit einem elektronischen Kraftaufnehmer gemessen. Gegenüber einer Kontrollprobe wird aus den Kraftwerten die Reduzierung der benötigten Kraft in % im Vergleich zur Kontrollprobe berechnet. Bei positiven Werten ist die Probe glatter als die Kontrolle, und bei negativen Werten ist die Probe stumpfer als die Kontrolle.

Die Abriebfestigkeit wurde nach der Taber-Abrasion-Methode gemäß ASTM D 4060 (Angabe des Gewichtsverlusts) unter einer Last von 500 g bestimmt. Angegeben ist Massenverlust in mg.

Nachfolgend ist die Tabelle mit den Testergebnissen in einem wässrigen, lufttrocknenden Polyurethanlack wiedergegeben.

| | **Kratzfestigkeit (Satra)** | | | | **Glanz (60°)** | **Oberflächenglätte ("Slip")** | **Abriebfestigkeit nach Taber (% Trübung)** |
|---|---|---|---|---|---|---|---|
| | **500 Zyklen** | **1.000 Zyklen** | **2.000 Zyklen** | **4.000 Zyklen** | | | |
| Kontrolle | 1 | 3 | 5 | 5 | 95 | ---- | 12,2 |
| Reine $Al_2O_3$-Dispersion aus Beispiel 1 (Ø = 40 nm) 0,5 Gew.-% (Vergleich) | 1 | 2 | 4 | 5 | 95 | -8% | 11,9 |
| Reine $Al_2O_3$-Dispersion aus Beispiel 1 (Ø = 40 nm) 1,0 Gew.-% (Vergleich) | 1 | 2 | 3 | 5 | 93 | -13% | 11,4 |
| Reine Wachs emulsion aus Beispiel 3 0,5 %Wachs (Vergleich) | 1 | 3 | 4 | 5 | 85 | +12% | 6,8 |

(fortgesetzt)

| | Kratzfestigkeit (Satra) | | | | Glanz (60°) | Oberflächenglätte ("Slip") | Abriebfestigkeit nach Taber (% Trübung) |
|---|---|---|---|---|---|---|---|
| | 500 Zyklen | 1.000 Zyklen | 2.000 Zyklen | 4.000 Zyklen | | | |
| Bsp. 1: $Al_2O_3$ (Ø = 40 nm) 0.5 Gew.-% + 0,5 % Wachsemul sion aus Bei spiel 3 (Erfindung) | 1 | 1 | 2 | 2-3 | 86 | -2% | 3,9 |
| Bsp.1 $Al_2O_3$ (Ø = 40 nm) 1,0 Gew.-% + 0,5% Wachsemul sion aus Bei spiel 3 (Erfindung) | 1 | 1 | 1 | 2 | 83 | -7% | 3,6 |

Die Gewichtsprozente beziehen sich auf den Gehalt der entsprechenden Partikelsorte im Gesamtfestkörper des eingesetzten Lacksystems.

Die vorstehenden Ergebnisse zeigen, daß durch die Inkorporierung der erfindungsgemäßen Dispersionen die Abriebs- und Verkratzungsbeständigkeit signifikant verbessert werden kann.

Die vorstehenden Versuche belegen in eindrucksvoller Weise die gesteigerte Leistungsfähigkeit der erfindungsgemäßen Systeme.

**Einfluß der bimodalen Teilchengrößenverteilung auf die Leistungsfähigkeit der erfindungsgemäßen Dispersionen**

Es wurde der Einfluß der bimodalen Teilchengrößenverteilung in bezug auf die Leistungsfähigkeit der erfindungsgemäßen Dispersionen untersucht. Zu diesem Zweck wurden erfindungsgemäße Dispersionen mit unterschiedlichem Verhältnis V des mittleren Teilchendurchmessers der wachsbasierten Partikel einerseits und der anorganischen Nanopartikel andererseits in das zuvor beschriebene polyurethanbasierte Beschichtungssystem inkorporiert (Mengen jeweils: 1,0 Gew.-% Nanopartikel ($Al_2O_3$-Nanopartikel mit mittlerem Teilchendurchmesser von ca. 40 nm und 0,5 Gew.-% Wachspartikel), wobei für V die Werte von ca. 1,05 ca. 3,1 ca. 5,2 und ca. 10,1 gewählt wurden.

Die besten Ergebnisse werden mit hohen V-Werten erreicht. Die Ergebnisse sind in der nachfolgenden Tabelle zusammengefaßt.

Nachfolgend ist die Tabelle mit den Testergebnissen wiedergegeben.

| | Kratzfestigkeit (Satra) | | | | Abriebfestigkeit nach Taber (mg) |
|---|---|---|---|---|---|
| | 500 Zyklen | 1.000 Zyklen | 2.000 Zyklen | 4.000 Zyklen | |
| V = 1,05 | 1-2 | 2-3 | 2-3 | 3 | **5,8** |
| V = 3,1 | 1-2 | 2 | 2-3 | 2-3 | **5,2** |
| V = 5,2 | 1 | 1-2 | 2 | 2-3 | **4,9** |
| V = 10,1 | 1 | 1-2 | 1-2 | 2 | **3,8** |

**Einfluß des Mengenverhältnisses auf die Leistungsfähigkeit der erfindungsgemäßen Dispersionen**

Es wurde der Einfluß des Mengenverhältnisses M von anorganischen Nanopartikeln einerseits und wachsbasierten Partikeln andererseits untersucht, wobei mit variierenden Werten für M verfahren wurde (M = ca. 0,6 bzw. ca. 5,2 bzw. ca. 10,4).

Zu diesem Zweck wurden erfindungsgemäße Dispersionen mit unterschiedlichem Verhältnis M in das zuvor beschriebene polyurethanbasierte Beschichtungssystem inkorporiert (Mengen an $Al_2O_3$-Nanopartikeln: jeweils 1,0 Gew.-%; variierende Mengen an Wachspartikeln zur Einstellung des zuvor bezifferten Verhältnisses M). Die besten Ergebnisse werden mit hohen M-Werten erreicht.

Die Ergebnisse sind in der nachfolgenden Tabelle zusammengefaßt.

| | **Kratzfestigkeit (Satra)** | | | | **Abriebfestigkeit nach Taber (mg)** |
|---|---|---|---|---|---|
| | **500 Zyklen** | **1.000 Zyklen** | **2.000 Zyklen** | **4.000 Zyklen** | |
| M = 0,6 | 1-2 | 2-3 | 2-3 | 3 | **12,3** |
| M = 5,2 | 1 | 2 | 2 | 2-3 | **8,9** |
| M = 10,4 | 1 | 1 | 1-2 | 2 | **4,6** |

**Patentansprüche**

1. Dispersionen, wobei die Dispersionen - neben einem Dispersionsmittel - in Kombination

   (a) einerseits Partikel auf Basis mindestens eines organischen Materials, welches mindestens ein Wachs enthält oder hieraus besteht, insbesondere Wachspartikel, wobei das Wachs funktionelle Gruppen enthält, wobei die funktionellen Gruppen polare Gruppen sind, welche Heteroatome aus der Gruppe von O, N und/oder S enthalten, und
   (b) andererseits Partikel auf Basis mindestens eines anorganischen Materials, insbesondere anorganische Nanopartikel,

   umfassen,
   ● wobei (a) die organischen Partikel einerseits und (b) die anorganischen Nanopartikel andererseits eine bimodale Teilchengrößenverteilung aufweisen, wobei für das Verhältnis V des mittleren Teilchendurchmessers der Partikel (a) $Ø_{Partikel}$ (a) zum mittleren Teilchendurchmesser der Partikel (b) $Ø_{Partikel}$ (b) gilt:

   $$V = \frac{Ø_{Partikel\,(a)}}{Ø_{Partikel\,(b)}} > 1;$$

   und
   ● wobei das gewichtsbezogene Verhältnis M der Partikel (b) zu den Partikeln (a) im Bereich von 0,01 bis 500 variiert.

2. Dispersionen nach Anspruch 1, **dadurch gekennzeichnet, daß** das Verhältnis V des mittleren Teilchendurchmessers der Partikel (a) $Ø_{Partikel}$ (a) zum mittleren Teilchendurchmesser der Partikel (b) $Ø_{Partikel}$ (b) im Bereich von 1,05 bis 1.000, insbesondere 2,05 bis 500, vorzugsweise 3,05 bis 250, besonders bevorzugt 5,05 bis 100, variiert.

3. Dispersionen nach einem der vorangehenden Ansprüche, **dadurch gekennzeichnet, daß** die organischen Partikel (a), insbesondere Wachspartikel, eine Teilchengröße im Bereich von 5 nm bis 500 µm, insbesondere 10 nm bis 200 µm, vorzugsweise 20 nm bis 150 µm, weiter bevorzugt 30 nm bis 125 µm, besonders bevorzugt 50 nm bis 100 µm, aufweisen und/oder daß die anorganischen Partikel (b), insbesondere anorganischen Nanopartikel, eine Teilchengröße im Bereich von 0,5 bis 1.000 nm, insbesondere 2 bis 800 nm, vorzugsweise 5 bis 700 nm, weiter bevorzugt 10 bis 600 nm, besonders bevorzugt 10 bis 500 nm, ganz besonders bevorzugt 20 bis 100 nm, aufweisen.

4. Dispersionen nach einem der vorangehenden Ansprüche, **dadurch gekennzeichnet, daß** das gewichtsbezogene Verhältnis M der Partikel (b) zu den Partikeln (a) mindestens 0,5, vorzugsweise mindestens 1, besonders bevorzugt mindestens 2, beträgt und/oder daß das gewichtsbezogene Verhältnis M der Partikel (b) zu den Partikeln (a) im Bereich von 0,5 bis 250, vorzugsweise 1 bis 150, besonders bevorzugt 2 bis 100, variiert.

5. Dispersionen nach einem der vorangehenden Ansprüche, **dadurch gekennzeichnet, daß** die Dispersionen die Partikel (a), bezogen auf die Dispersionen, in Mengen von 0,01 bis 30 Gew.-%, insbesondere 0,05 bis 20 Gew.-%, vorzugsweise 0,1 bis 15 Gew.-%, besonders bevorzugt 0,1 bis 10 Gew.-%, ganz besonders bevorzugt 0,2 bis 5 Gew.-%, enthalten und/oder daß die Dispersionen die Partikel (b), bezogen auf die Dispersionen, in Mengen von 0,01 bis 50 Gew.-%, insbesondere 0,1 bis 40 Gew.-%, vorzugsweise 0,2 bis 30 Gew.-%, besonders bevorzugt 0,3 bis 20 Gew.-%, ganz besonders bevorzugt 0,5 bis 10 Gew.-%, enthalten.

6. Dispersionen nach einem der vorangehenden Ansprüche, **dadurch gekennzeichnet, daß** das anorganisch basierte Material der Partikel (b) aus mindestens einem gegebenenfalls dotierten anorganischen Oxid, Hydroxid, Oxidhydroxid, Fluorid, Apatit, Borat, Sulfat, Phosphat, Sulfid, Selenid, Tellurid, Titanat, Vanadat, Wolframat, Bismutat, Carbonat, Nitrid, Silikat, Carbid, und/oder Metall, einer intermetallischen Phase, Metallsalz oder aber aus Mischungen oder Kombinationen solcher Verbindungen gebildet ist oder diese Verbindung(en) enthält und/oder daß das anorganisch basierte Material der Partikel (b) aus mindestens einem gegebenenfalls dotierten Oxid, Hydroxid, Oxidhydroxid, Apatit, Fluorid, Borat, Selenid, Tellurid, Titanat, Vanadat, Wolframat, Bismutat, Sulfat, Phosphat, Sulfid, Carbonat, Nitrid, Silikat und/oder Carbid mindestens eines Metalls oder Halbmetalls oder aber aus einem Metall/Element, einer intermetallischen Phase, Metallsalz, Kohlenstoffnanoröhrchen, Kohlenstoffallotropen, oder aber aus Mischungen oder Kombinationen solcher Verbindungen gebildet ist oder diese Verbindung(en) enthält.

7. Dispersionen nach einem der vorangehenden Ansprüche, **dadurch gekennzeichnet, daß** das anorganisch basierte Material der Partikel (b) aus mindestens einem gegebenenfalls dotierten Oxid, Hydroxid und/oder Oxidhydroxid des Aluminiums, Siliziums, Zinks, Titans, Cers und/oder Eisens, einem Erdalkalisulfat, einem Erdalkali-, Alkali-, oder Übergangsmetall- oder Lanthanoidphosphat, einem Alkali-, Erdalkali-, Übergangsmetall- oder Lanthanoidvanadat, einem Cadmium-oder Zinksulfid, einem Cadmium- oder Zinkselenid, einem Cadmium- oder Zinktellurid, einem Erdalkalicarbonat, einem Aluminium- oder Siliziumnitrid, einem Erdalkalisilkat, einem Siliciumcarbid, Kohlenstoffallotropen, einem Edelmetall, wie z.B. Silber, Platin, Palladium oder Gold, oder aber aus Mischungen oder Kombinationen solcher Verbindungen gebildet ist oder diese Verbindung(en) enthält und/oder daß das anorganisch basierte Material der Partikel (b) aus Aluminiumoxid, Siliziumdioxid, Zinkoxid, Ceroxid, Silber, Kohlenstoffnanoröhren und/oder Titandioxid gebildet ist oder diese Verbindung(en) enthält.

8. Dispersionen nach einem der vorangehenden Ansprüche, **dadurch gekennzeichnet, daß** das anorganisch basierte Material der Partikel (b) oberflächenmodifiziert ist, insbesondere mittels Polysiloxangruppen.

9. Dispersionen nach einem der vorangehenden Ansprüche, **dadurch gekennzeichnet, daß** das organisch basierte Material der Partikel (a) aus mindestens einem Wachs gebildet ist oder dieses enthält, insbesondere wobei das Wachs ausgewählt ist aus der Gruppe von (i) natürlichen Wachsen, insbesondere pflanzlichen, tierischen und Mineralwachsen; (ii) chemisch modifizierten Wachsen; (iii) synthetischen Wachsen; sowie deren Mischungen, insbesondere wobei das Wachs ein synthetisches Wachs, insbesondere ein polyolefinbasiertes Wachs, vorzugsweise ein Wachs auf Basis eines oxidierten Polyolefins, ist.

10. Dispersionen nach einem der vorangehenden Ansprüche, **dadurch gekennzeichnet, daß** das Wachs als funktionelle Gruppen Hydroxylgruppen, Polyethergruppen, insbesondere Polyalkylenoxidgruppen, und/oder Carboxylgruppen, besonders bevorzugt Polyethergruppen und/oder Hydroxylgruppen, enthält.

11. Dispersionen nach einem der vorangehenden Ansprüche, **dadurch gekennzeichnet, daß** die Dispersionen außerdem mindestens einen weiteren Inhaltsstoff und/oder mindestens ein Additiv enthalten, insbesondere ausgewählt aus der Gruppe von Emulgatoren, Netzmitteln, Antioxidationsmitteln, Stabilisatoren, Neutralisationsmitteln, Verdikkungsmitteln, Dispergiermitteln, organischen Lösemitteln, Lösungsvermittlern und Bioziden sowie deren Mischungen.

12. Verwendung von Dispersionen nach den vorangehenden Ansprüchen in Beschichtungsstoffen und Beschichtungssystemen, insbesondere Lacken, Farben und dergleichen, in Dispersionen aller Art, in Kunststoffen, in Schaumstoffe, in Kosmetika, insbesondere Nagellacken, in Klebstoffen und in Dichtungsmassen.

13. Verwendung nach Anspruch 12 zur Verbesserung der mechanischen Eigenschaften, insbesondere zur Steigerung der Verschleißbeständigkeit, vorzugsweise der Kratzfestigkeit und/oder Abriebfestigkeit.

14. Beschichtungsstoffe und Beschichtungssysteme, insbesondere Lacke, Farben, Kunststoffe, Schaumstoffe, Kosmetika, insbesondere Nagellacke, Klebstoffe und Dichtungsmassen, enthaltend Dispersionen nach den vorangehenden Ansprüchen.

15. Verwendung einer Kombination von

(a) Partikeln auf Basis mindestens eines organischen Materials einerseits, welches mindestens ein Wachs enthält oder hieraus besteht, insbesondere Wachspartikeln, wobei das Wachs funktionelle Gruppen enthält, wobei die funktionellen Gruppen polare Gruppen sind, welche Heteroatome aus der Gruppe von O, N und/oder

S enthalten, und

(b) Partikeln auf Basis mindestens eines anorganischen Materials, insbesondere anorganische Nanopartikeln, andererseits

in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen und in Dichtungsmassen,

● wobei (a) die organischen Partikel einerseits und (b) die anorganischen Nanopartikel andererseits eine bimodale Teilchengrößenverteilung aufweisen, wobei für das Verhältnis V des mittleren Teilchendurchmessers der Partikel (a) $Ø_{Partikel\ (a)}$ zum mittleren Teilchendurchmesser der Partikel (b) $Ø_{Partikel\ (b)}$ gilt:

$$V = \frac{Ø_{Partikel\ (a)}}{Ø_{Partikel\ (b)}} > 1;$$

und

● wobei das gewichtsbezogene Verhältnis M der Partikel (b) zu den Partikeln (a) im Bereich von 0,01 bis 500 variiert.

## Claims

**1.** Dispersions, where the dispersions - besides a dispersion medium - comprise in combination

(a) firstly, particles based on at least one organic material which comprises or consists of at least one wax, in particular wax particles, the wax comprising functional groups, the functional groups being polar groups which contain heteroatoms from the group of O, N and/or S, and

(b) secondly, particles based on at least one inorganic material, in particular inorganic nanoparticles,

● where (a) the organic particles, on the one hand, and (b) the inorganic nanoparticles, on the other hand, have a bimodal particle size distribution, where for the ratio V of the average particle diameter of the particles (a) $Ø_{particles\ (a)}$ to the average particle diameter of the particles (b) $Ø_{particles}$ (b) it is the case that:

$$V= \frac{Ø_{particles\ (a)}}{Ø_{particles\ (b)}} > 1\ ;$$

and

● where the weight-based ratio M of the particles (b) to the particles (a) varies in the range from 0.01 to 500.

**2.** Dispersions according to Claim 1, **characterized in that** the ratio V of the average particle diameter of the particles (a) $Ø_{particles\ (a)}$ to the average particle diameter of the particles (b) $Ø_{particles\ (b)}$ varies in the range from 1.05 to 1000, in particular 2.05 to 500, preferably 3.05 to 250, more preferably 5.05 to 100.

**3.** Dispersions according to either of the preceding claims, **characterized in that** the organic particles (a), in particular wax particles, have a particle size in the range from 5 nm to 500 μm, in particular 10 nm to 200 μm, preferably 20 nm to 150 μm, more preferably 30 nm to 125 μm, very preferably 50 nm to 100 μm, and/or **in that** the inorganic particles (b), in particular inorganic nanoparticles, have a particle size in the range from 0.5 to 1000 nm, in particular 2 to 800 nm, preferably 5 to 700 nm, more preferably 10 to 600 nm, very preferably 10 to 500 nm, especially preferably 20 to 100 nm.

**4.** Dispersions according to any of the preceding claims, **characterized in that** the weight-based ratio M of the particles (b) to the particles (a) is at least 0.5, preferably at least 1, more preferably at least 2, and/or **in that** the weight-based ratio M of the particles (b) to the particles (a) varies in the range from 0.5 to 250, preferably 1 to 150, more preferably 2 to 100.

**5.** Dispersions according to any of the preceding claims, **characterized in that** the dispersions comprise the particles

(a), based on the dispersions, in amounts of 0.01% to 30%, in particular 0.05% to 20%, preferably 0.1% to 15%, more preferably 0.1% to 10%, very preferably 0.2% to 5%, by weight, and/or **in that** the dispersions comprise the particles (b), based on the dispersions, in amounts of 0.01% to 50%, in particular 0.1% to 40%, preferably 0.2% to 30%, more preferably 0.3% to 20%, very preferably 0.5% to 10%, by weight.

**6.** Dispersions according to any of the preceding claims, **characterized in that** the inorganic-based material of the particles (b) is formed of at least one optionally doped inorganic oxide, hydroxide, oxide hydroxide, fluoride, apatite, borate, sulphate, phosphate, sulphide, selenide, telluride, titanate, vanadate, tungstate, bismuthate, carbonate, nitride, silicate, carbide, and/or metal, an intermetallic phase, metal salt or else of mixtures or combinations of such compounds, or comprises said compound(s), and/or **in that** the inorganic-based material of the particles (b) is formed of at least one optionally doped oxide, hydroxide, oxide hydroxide, apatite, fluoride, borate, selenide, telluride, titanate, vanadate, tungstate, bismuthate, sulphate, phosphate, sulphide, carbonate, nitride, silicate and/or carbide of at least one metal or semimetal or else of a metal/element, an intermetallic phase, metal salt, carbon nanotubes, carbon allotropes, or else of mixtures or combinations of such compounds, or comprises said compound(s).

**7.** Dispersions according to any of the preceding claims, **characterized in that** the inorganic-based material of the particles (b) is formed of at least one optionally doped oxide, hydroxide and/or oxide hydroxide of aluminium, of silicon, of zinc, of titanium, of cerium and/or of iron, an alkaline earth metal sulphate, an alkaline earth metal, alkali metal, or transition metal or lanthanoid phosphate, an alkali metal, alkaline earth metal, transition metal or lanthanoid vanadate, a cadmium sulphide or zinc sulphide, a cadmium selenide or zinc selenide, a cadmium telluride or zinc telluride, an alkaline earth metal carbonate, an aluminium nitride or silicon nitride, an alkaline earth metal silicate, a silicon carbide, carbon allotropes, a noble metal such as silver, platinum, palladium or gold, or else of mixtures or combinations of such compounds, or comprises said compound(s), and/or **in that** the inorganic-based material of the particles (b) is formed of aluminium oxide, silicon dioxide, zinc oxide, cerium oxide, silver, carbon nanotubes and/or titanium dioxide, or comprises said compound(s).

**8.** Dispersions according to any of the preceding claims, **characterized in that** the inorganic-based material of the particles (b) is surface-modified, in particular by means of polysiloxane groups.

**9.** Dispersions according to any of the preceding claims, **characterized in that** the organic-based material of the particles (a) is formed of at least one wax or comprises said wax, in particular where the wax is selected from the group of (i) natural waxes, in particular plant, animal, and mineral waxes; (ii) chemically modified waxes; (iii) synthetic waxes; and mixtures thereof, in particular where the wax is a synthetic wax, in particular a polyolefin-based wax, preferably a wax based on an oxidized polyolefin.

**10.** Dispersions according to any of the preceding claims, **characterized in that** the wax comprises, as functional groups, hydroxyl groups, polyether groups, in particular polyalkylene oxide groups, and/or carboxyl groups, very preferably polyether groups and/or hydroxyl groups.

**11.** Dispersions according to any of the preceding claims, **characterized in that** the dispersions further comprise at least one further ingredient and/or at least one additive, in particular selected from the group of emulsifiers, wetting agents, antioxidants, stabilizers, neutralizing agents, thickeners, dispersants, organic solvents, solubilizers, and biocides, and also mixtures thereof.

**12.** Use of dispersions according to the preceding claims in coating materials and coating systems, in particular paints, inks, and the like, in dispersions of all kinds, in plastics, in foams, in cosmetics, in particular nail varnishes, in adhesives, and in sealants.

**13.** Use according to Claim 12 for improving the mechanical properties, in particular for increasing the wear resistance, preferably the scratch resistance and/or abrasion resistance.

**14.** Coating materials and coating systems, in particular paints, inks, plastics, foams, cosmetics, in particular nail varnishes, adhesives, and sealants, comprising dispersions according to the preceding claims.

**15.** Use of a combination of

(a) firstly, particles based on at least one organic material which comprises or consists of at least one wax, in particular wax particles, the wax comprising functional groups, the functional groups being polar groups which

contain heteroatoms from the group of O, N and/or S, and
(b) secondly, particles based on at least one inorganic material, in particular inorganic nanoparticles,

in coating materials and coating systems, in particular paints, inks, and the like, in dispersions of all kinds, in plastics, in foams, in cosmetics, in particular nail varnishes, in adhesives, and in sealants,

- where (a) the organic particles, on the one hand, and (b) the inorganic nanoparticles, on the other hand, have a bimodal particle size distribution, where for the ratio V of the average particle diameter of the particles (a) $Ø_{\text{particles (a)}}$ to the average particle diameter of the particles (b) $Ø_{\text{particles (b)}}$ it is the case that:

$$V = \frac{Ø_{\text{particles (a)}}}{Ø_{\text{particles (b)}}} > 1;$$

and
- where the weight-based ratio M of the particles (b) to the particles (a) varies in the range from 0.01 to 500.

## Revendications

**1.** Dispersions, lesdites dispersions comprenant - outre un dispersant - en combinaison

(a) d'une part des particules à base d'au moins un matériau organique, qui contient au moins une cire ou qui est constitué par celle-ci, en particulier des particules de cire, la cire contenant des groupes fonctionnels, où les groupes fonctionnels sont des groupes polaires qui contiennent des hétéroatomes du groupe formé par O, N et/ou S, et
(b) d'autre part des particules à base d'au moins un matériau inorganique, en particulier des nanoparticules inorganiques,

- (a) les particules organiques d'une part et (b) les nanoparticules inorganiques d'autre part présentant une répartition bimodale des grosseurs des particules, le rapport V du diamètre moyen des particules (a) $Ø_{\text{Particules (a)}}$ au diamètre moyen des particules (b) $Ø_{\text{Particules (b)}}$ valant:

$$V = \frac{Ø_{Particule\ (a)}}{Ø_{Particule\ (b)}} > 1$$

et
- le rapport pondéral M des particules (b) aux particules (a) variant dans la plage de 0,01 à 500.

**2.** Dispersions selon la revendication 1, **caractérisées en ce que** le rapport V du diamètre moyen des particules (a) $Ø_{\text{Particules (a)}}$ au diamètre moyen des particules (b) $Ø_{\text{Particules (b)}}$ se situe dans la plage de 1,05 à 1000, en particulier de 2,05 à 500, de préférence de 3,05 à 250, de manière particulièrement préférée de 5,05 à 100.

**3.** Dispersions selon l'une quelconque des revendications précédentes, **caractérisées en ce que** les particules (a), en particulier des particules de cire, présentent une grosseur de particule dans la plage de 5 nm à 500 μm, en particulier de 10 nm à 200 μm, de préférence de 20 nm à 150 μm, plus préférablement de 30 nm à 125 μm, de manière particulièrement préférée de 50 nm à 100 μm, et/ou **en ce que** les particules inorganiques (b), en particulier des nanoparticules inorganiques, présentent une grosseur de particule dans la plage de 0,5 à 1000 nm, en particulier de 2 à 800 nm, de préférence 5 à 700 nm, plus préférablement de 10 à 600 nm, de manière particulièrement préférée de 10 à 500 nm, de manière tout particulièrement préférée de 20 à 100 nm.

**4.** Dispersions selon l'une quelconque des revendications précédentes, **caractérisées en ce que** le rapport pondéral M des particules (b) aux particules (a) vaut au moins 0,5, de préférence au moins 1, de manière particulièrement préférée au moins 2 et/ou **en ce que** le rapport pondéral M des particules (b) aux particules (a) varie dans la plage de 0,5 à 250, de préférence de 1 à 150, de manière particulièrement préférée de 2 à 100.

**5.** Dispersions selon l'une quelconque des revendications précédentes, **caractérisées en ce que** les dispersions contiennent les particules (a), par rapport aux dispersions, en des quantités de 0,01 à 30% en poids, en particulier de 0,05 à 20% en poids, de préférence de 0,1 à 15% en poids, de manière particulièrement préférée de 0,1 à 10% en poids, de manière tout particulièrement préférée de 0,2 à 5% en poids, et/ou **en ce que** les dispersions contiennent les particules (b), par rapport aux dispersions, en des quantités de 0,01 à 50% en poids, en particulier de 0,1 à 40% en poids, de préférence de 0,2 à 30% en poids, de manière particulièrement préférée de 0,3 à 20% en poids, de manière tout particulièrement préférée de 0,5 à 10% en poids.

**6.** Dispersions selon l'une quelconque des revendications précédentes, **caractérisées en ce que** le matériau à base inorganique des particules (b) est formé à partir d'au moins un oxyde, hydroxyde, oxyde-hydroxyde, fluorure, apatite, borate, sulfate, phosphate, sulfure, séléniure, tellurure, titanate, vanadate, tungsténate, bismuthate, carbonate, nitrure, silicate, carbure et/ou métal inorganique, le cas échéant dopé, une phase intermétallique, un sel métallique ou de mélanges ou de combinaisons de ces composés ou contient ce ou ces composé(s) et/ou **en ce que** le matériau à base inorganique des particules (b) est formé à partir d'au moins un oxyde, hydroxyde, oxyde-hydroxyde, apatite, fluorure, borate, séléniure, tellurure, titanate, vanadate, tungsténate, bismuthate, sulfate, phosphate, sulfure, carbonate, nitrure, silicate et/ou carbure d'au moins un métal ou semi-métal ou encore à partir d'un métal/élément, d'une phase intermétallique, d'un sel métallique, de nanotubes carbonés, d'allotropes carbonés ou encore de mélanges ou de combinaisons de ces composés ou contient ce ou ces composé(s).

**7.** Dispersions selon l'une quelconque des revendications précédentes, **caractérisées en ce que** le matériau à base inorganique des particules (b) est formé à partir d'au moins un oxyde, hydroxyde et/ou oxyde-hydroxyde le cas échéant dopé de l'aluminium, du silicium, du zinc, du titane, du cérium et/ou du fer, d'un sulfate de métal alcalino-terreux, d'un phosphate de métal alcalino-terreux, alcalin ou de transition ou de lanthanide, un vanadate de métal alcalin, alcalino-terreux, de transition ou de lanthanide, d'un sulfure de cadmium ou de zinc, d'un séléniure de cadmium ou de zinc, un tellurure de cadmium ou de zinc, d'un carbonate de métal alcalino-terreux, un nitrure d'aluminium ou de silicium, un silicate de métal alcalino-terreux, un carbure de silicium, un allotrope de carbone, un métal noble, tel que par exemple l'argent, le platine, le palladium ou l'or, ou encore de mélanges ou de combinaisons de ces composés ou contient ce ou ces composé(s) et/ou **en ce que** le matériau à base inorganique des particules (b) est formé à partir d'oxyde d'aluminium, de dioxyde de silicium, d'oxyde de zinc, d'oxyde de cérium, d'argent, de nanotubes de carbone et/ou de dioxyde de titane ou contient ce ou ces composé(s).

**8.** Dispersions selon l'une quelconque des revendications précédentes, **caractérisées en ce que** le matériau à base inorganique des particules (b) est à surface modifiée, en particulier par des groupes polysiloxane.

**9.** Dispersions selon l'une quelconque des revendications précédentes, **caractérisées en ce que** le matériau à base organique des particules (a) est formé à partir d'au moins une cire ou contient celle-ci, la cire étant en particulier choisie parmi les groupes formés par (i) les cires naturelles, en particulier les cires végétales, animales et minérales; (ii) les cires chimiquement modifiées; (iii) les cires synthétiques; ainsi que leurs mélanges, la cire étant en particulier une cire synthétique, en particulier une cire à base de polyoléfine, de préférence une cire à base d'une polyoléfine oxydée.

**10.** Dispersions selon l'une quelconque des revendications précédentes, **caractérisées en ce que** la cire contient comme groupes fonctionnels des groupes hydroxyle, polyéther, en particulier des groupes poly(oxyde d'alkylène), et/ou des groupes carboxyle, de manière particulièrement préférée des groupes polyéther et/ou hydroxyle.

**11.** Dispersions selon l'une quelconque des revendications précédentes, **caractérisées en ce que** les dispersions contiennent en outre au moins un autre constituant et/ou au moins un additif, en particulier choisi dans le groupe formé par les émulsifiants, les mouillants, les antioxydants, les stabilisateurs, les agents de neutralisation, les épaississants, les dispersants, les solvants organiques, les promoteurs de solubilisation et les biocides ainsi que leurs mélanges.

**12.** Utilisation de dispersions selon les revendications précédentes dans des substances de revêtement et des systèmes de revêtement, en particulier des laques, des encres et analogues, dans des dispersions de tous types, dans des matériaux synthétiques, dans des mousses, dans des cosmétiques, en particulier des vernis à ongles, dans des adhésifs et dans des masses d'étanchéité.

**13.** Utilisation selon la revendication 12 pour améliorer les propriétés mécaniques, en particulier pour augmenter la résistance à l'usure, de préférence la résistance aux griffes et/ou la résistance à l'abrasion.

**14.** Substances de revêtement et systèmes de revêtement, en particulier laques, encres, matériaux synthétiques, mousses, cosmétiques, en particulier vernis à ongles, adhésifs et masses d'étanchéité, contenant des dispersions selon l'une quelconque des revendications précédentes.

**15.** Utilisation d'une combinaison

(a) d'une part de particules à base d'au moins un matériau organique, qui contient au moins une cire ou qui est constitué par celle-ci, en particulier des particules de cire, la cire contenant des groupes fonctionnels, où les groupes fonctionnels sont des groupes polaires qui contiennent des hétéroatomes du groupe formé par O, N et/ou S, et
(b) d'autre part de particules à base d'au moins un matériau inorganique, en particulier des nanoparticules inorganiques,

dans des substances de revêtement et des systèmes de revêtement, en particulier des laques, des encres et analogues, dans des dispersions de tous types, dans des matériaux synthétiques, dans des mousses, dans des cosmétiques, en particulier des vernis à ongles, dans des adhésifs et dans des masses d'étanchéité,

- (a) les particules organiques d'une part et (b) les nanoparticules inorganiques d'autre part présentant une répartition bimodale des grosseurs des particules, le rapport V du diamètre moyen des particules (a) $Ø_{Particules}$ (a) au diamètre moyen des particules (b) $Ø_{Particules}$ (b) valant:

$$V = \frac{Ø_{Particule\ (a)}}{Ø_{Particule\ (b)}} > 1$$

et
- le rapport pondéral M des particules (b) aux particules (a) variant dans la plage de 0,01 à 500.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*


### In der Beschreibung aufgeführte Patentdokumente

- WO 2007072189 A2
- EP 0960871 A2
- JP 07138484 A
- WO 2008093999 A1
- WO 2007146390 A2
- WO 2007095292 A2
- US 20050136349 A1
- EP 1609379 A1
- US 20060041047 A1
- GB 2410500 A
- WO 0175216 A1
- WO 0110635 A2
- US 20060147828 A1
- JP 2004181864 A
- JP 2006272767 A
- DE 102005006870 A1
- EP 1690902 A2
- DE 102007030285 A1
- EP 2007006273 W

### In der Beschreibung aufgeführte Nicht-Patentliteratur

- Römpp Chemielexikon. Georg Thieme Verlag, 1999, vol. 6, 4906
- *Cosm. Toil.,* 1986, vol. 101, 49